# EUROPEAN PATENT APPLICATION

(11) **EP 4 589 890 A1**
(43) Date of publication of application: **23.07.2025**
(21) Application number: 22958369.5
(22) Date of filing: 13.09.2022
(51) Int. Cl.: H04L 27/00, H04W 8/18

(54) **INFORMATION PROCESSING METHODS AND APPARATUSES, COMMUNICATION DEVICE AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/118571
(87) International publication number: WO 2024/055175

(57) **Abstract**

Information processing methods and apparatuses, a communication device and a storage medium. An information processing method executed by a first network device comprises: when a second network device requests a data processing service of a user equipment (UE) and user data processing authorization of the UE is changed, sending a notification message to the second network device, the notification message being used for notifying the second network device to update user data processing of the UE.

## Description

### TECHNICAL FIELD

The present disclosure relates to a field of wireless communication technology but is not limited thereto, and more particularly, relates to a method and an apparatus for processing information, a communication device, and a storage medium.

### BACKGROUND

In roaming scenarios, it may be necessary to collect user data or usage analysis of a roaming user equipment (UE) from a Visited Public Land Mobile Network (VPLMN) and a Home Public Land Mobile Network (HPLMN).

In such cases, the user data may be exchanged between different network devices, such as information exchange between different network devices within the VPLMN and HPLMN.

### SUMMARY

Embodiments of the present disclosure provide a method and an apparatus for processing information, a communication device, and a storage medium.

A first aspect of the embodiments of the present disclosure provides a method for processing information, where the method is performed by a first network device and includes:

sending, when a second network device requests a data processing service from a user equipment UE and an authorization for user data processing of the UE is changed, a notification message to the second network device, where the notification message is used to notify the second network device to update the user data processing of the UE.

A second aspect of the embodiments of the present disclosure provides a method for processing information, performed by a second network device, and the method includes:
receiving a notification message; and
updating user data processing of a UE according to the notification message.

A third aspect of the embodiments of the present disclosure provides an apparatus for processing information, where the apparatus includes:
a sending module, configured to send a notification message to a second network device when the second network device requests a data processing service from a user equipment UE and an authorization for user data processing of the UE is changed, where the notification message is used to notify the second network device to update the user data processing of the UE.

A fourth aspect of the embodiments of the present disclosure provides an apparatus for processing information, where the apparatus includes:
a request module, configured to request a data processing service from a first network device;
a receiving module, configured to receive a notification message; and
an update module, configured to update user data processing of a UE according to the notification message.

A fifth aspect of the present disclosure provides a communication device, including a processor, a transceiver, a memory, and an executable program stored on the memory and capable of being executed by the processor. When the processor executes the executable program, the method for processing information provided in the first or second aspect as described above is performed.

A sixth aspect of the embodiments of the present disclosure provides a computer storage medium, and the computer storage medium stores an executable program; the executable program is executed by a processor to implement the method for processing information provided in the first or second aspect.

In the technical solution provided in the embodiments of the present disclosure, if the authorization for the user data processing of the UE changes, the first network device promptly notifies the second network device such that the second network device performs the processing according to the updated user data.

It should be understood that the above general description and the following detailed description are merely exemplary and explanatory, and should not be construed as limiting the present disclosure

### BRIEF DESCRIPTION OF THE DRAWINGS

The drawings provided herein are incorporated into and form a part of the specification, illustrating embodiments consistent with the present disclosure, and are used in conjunction with the specification to explain the principles of the present disclosure.
FIG. 1 is a schematic diagram of a structure of a wireless communication system according to an exemplary embodiment;
FIG. 2 is a flowchart of a method for processing information according to an exemplary embodiment;
FIG. 3 is a flowchart of a method for processing information according to an exemplary embodiment;
FIG. 4 is a flowchart of a method for processing information according to an exemplary embodiment;
FIG. 5A is a flowchart of a method for processing information according to an exemplary embodiment;
FIG. 5B is a flowchart of a method for processing information according to an exemplary embodiment;
FIG. 5C is a flowchart of a method for processing information according to an exemplary embodiment;
FIG. 6 is a schematic diagram of a structure of an apparatus for processing information according to an exemplary embodiment;
FIG. 7 is a schematic diagram of a structure of an apparatus for processing information according to an exemplary embodiment;
FIG. 8 is a schematic diagram of a structure of a communication device according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all possible implementations consistent with embodiments of the present disclosure. Instead, they are merely examples of apparatus and method consistent with some aspects of the embodiments of the present disclosure.

The terms used in the present disclosure are only for the purpose of describing specific embodiments, and are not intended to limit embodiments of the present disclosure. The singular forms of "a" "said" and "the" used in the present disclosure are also intended to include plural forms, unless the context clearly indicates other meanings. It should be understood that the term "and/or" as used herein refers to and includes any or all possible combinations of one or more associated listed items.

It should be understood that although the terms "first", "second", and "third" may be used in embodiments of the present disclosure to describe various types of information, the information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the term "if" as used herein may be interpreted as "when", "in the event that" or "in response to determining".

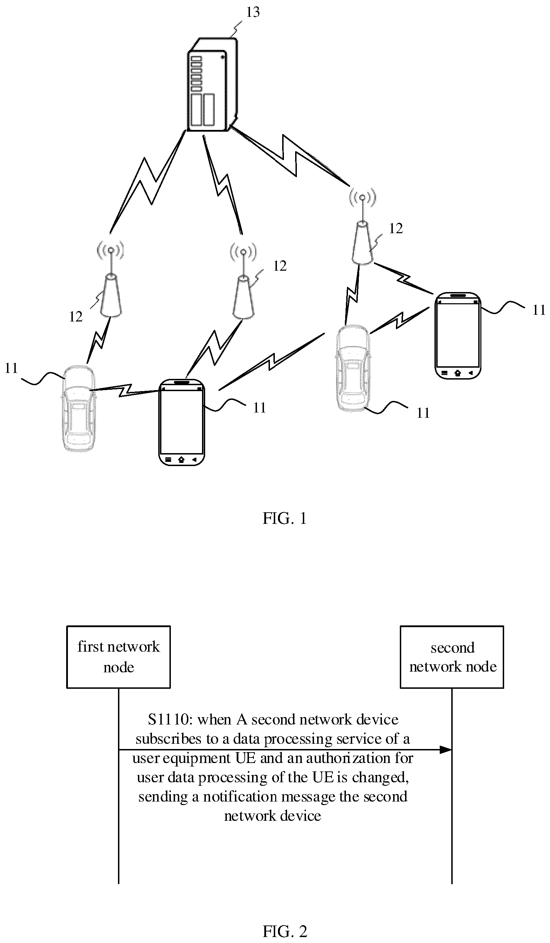

**FIG.** 1 is a schematic diagram of a structure of a wireless communication system provided by an embodiment of the present disclosure. As illustrated in FIG. 1, the wireless communication system is a communication system based on cellular mobile communication technology. The wireless communication system may include: several UEs 11 and several access devices 12.

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a mobile phone (or "cellular" phone), and a computer with the IoT UE, for example, a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment. Or, the UE 11 may also be an unmanned aerial vehicle device. Or, the UE 11 may also be an in-vehicle device, for example, a driving computer having wireless communication function or a wireless communication device external to the driving computer. Or, the UE 11 may also be a roadside device, for example, a street light, a signal light, or other roadside devices having the wireless communication function.

The access device 12 may be a network side device in the wireless communication system. The wireless communication system may be a 4th Generation (4G) mobile communication system, also known as a Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called a New Generation-Radio Access Network (NG-RAN) or a machine type communication (MTC) system.

The access device 12 may be an evolved access device (eNB) employed in the 4G system. Or, the access device 12 may be an access device (gNB) with a centralized distributed architecture employed in the 5G system. When the access device 12 adopts a centralized-distributed architecture, the access device 12 usually includes a central unit (CU) and at least two distributed units (DUs). The CU is equipped with protocol stacks of a Packet Data Convergence Protocol (PDCP) layer, a Radio Link Control (RLC) layer, and a Media Access Control (MAC) layer. The DU is equipped with a protocol stack of a physical (PHY) layer, and the specific implementation of the access device 12 is not limited in embodiments of the present disclosure.

A wireless connection may be established between the access device 12 and the UE 11 via a wireless radio interface. In different implementations, the wireless radio interface is a wireless radio interface based on the 4G standard. Or, the wireless radio interface is a wireless radio interface based on the 5G standard, such as a NR. Or, the wireless radio interface may be a wireless radio interface based on the standard of the next generation of 5G.

As shown in FIG. 2, the embodiments of the present disclosure provide a method for processing information, where the method is performed by a first network device and includes:
S1110: when a second network device requests a data processing service from a user equipment UE and an authorization for user data processing of the UE is changed, sending a notification message the second network device, where the notification message is used to notify the second network device to update the user data processing of the UE.

The first network device may be a core network device. For example, the first network device may be Unified Data Management (UDM) or Unified Data Repository (UDR). The first network device may be located in a Home public land mobile network (HPLMN) of the UE.

The UE herein may be any UE that moves from a home location to a visited location.

The UE includes but is not limited to: a mobile phone, a tablet, a wearable device, a in-vehicle device, and/or a smart office device.

The user data of the UE herein includes, but is not limited to, subscription data of the UE and/or behavior data of the UE.

The subscription data of the UE herein may be data of a contract signed between the UE and a communication operator, including service activation, service deactivation, and/or service modification.

The behavior data of the UE may include mobility data of the UE, network access data of the UE, and/or service usage data of the UE.

The change in authorization for user data processing is caused by at least one of the following:
a change in the service subscribed by the UE; different services may correspond to different pre-authorizations for user data processing.
receiving an authorization change indication sent by the UE.

For example, the service subscribed by the user changes, different services have different pre-authorizations at the time of subscription.

During the registration phase or periodic registration phase, the user is allowed to authorize user data processing, revoke the authorization, or update an authorization parameter.

In some embodiments, if the authorization change indication provided by the UE is determined by the first network device to be a legal behavior, the authorization for the user data processing of the UE is updated according to the authorization change indication.

In some other embodiments, if the authorization change indication provided by the UE is determined by the first network device to be an illegal behavior, the authorization change for the user data processing of the UE is rejected.

For example, if the user data processing corresponding to the authorization change indication violates data and/or network supervision specified by laws and regulations, the first network device may determine that the authorization change indication is the illegal behavior.

The change in authorization for the user data processing may include at least one of the following:
the UE authorizing the second network device to perform the user data processing.
the UE revoking the second network device from processing and using user data.
the UE updating a permission scope of the second network device for processing the user data.
the UE updating a type of the second network device authorized to process the user data.
the UE updating a usage of an analysis result and/or a collection result obtained from the user data authorized for processing.

Of course, the above is merely an illustrative example of changes in user data authorization, and the specific implementation is not limited to the above descriptions.

The second network device herein may be various network devices that perform the user data processing of the UE, which includes but is not limited to a core network device and/or an access network device.

In the embodiments of the present disclosure, if the authorization for the user data processing of the UE changes, the first network device promptly notifies the second network device such that the second network device performs the processing according to the updated user data.

In some embodiments, the user data processing includes at least one of the following:
collection of user data.
analysis of user data.
use of an analysis result of user data.
use of a collection result of user data.

In some embodiments, the user data processing may include that: since the UE inevitably generates the corresponding subscription data and/or behavior data when using the network, the collection of the user data may be performed at this time.

In some other embodiments, the user data processing may further include: after the user data of the UE is collected, specific analyses may be performed on the corresponding user data, such as an analysis of a movement trajectory of the UE, an analysis of consumption habits of the UE, and an analysis of service preferences of the UE. There are merely examples of the user data analysis, and the specific implementation is not limited to the above examples.

In some embodiments, after completing the collection and analysis of the user data, the corresponding collection result and analysis result is generated. Some network devices may use the collected or analyzed user data to perform specific operations. For example, based on the analysis result of the user data, a service recommendation may be provided to the UE, or an appropriate network access may be selected for the UE. Such service recommendations and recommendations or selections of appropriate network access belong to the use of the analysis result.

For another example, after the collection result of the user data of the UE is obtained, the data may be analyzed according to the collection result or the data may be stored and backed up for retention or other subsequent processing, and the subsequent processes all constitute the use of the collection result.

In some embodiments, the second network device includes at least one of the following:
a network device that collects user data;
a network device that analyzes user data;
a network device that uses a collection result of user data;
a network device that uses an analysis result of user data.

The second network device may be any of the aforementioned devices. For example, the second network device may be a Network Data Analysis Function (NWDAF). For another example, the second network device may be an Application Function (AF).

The second network device may be located in the HPLMN of the UE or at the VPLMN of the UE.

In some embodiments, the notification message includes an identifier of the UE; the notification message further includes at least one of the following:
revocation information, indicating revocation of the authorization for the user data processing;
authorization update information, indicating an update to an authorization parameter for the user data processing; or
authorization information, indicating the authorization for the user data processing.

In the present disclosure, the notification message may be any notification related to user data authorization. Specifically, it indicates what kind of change in the user data authorization for the UE, which may be determined according to information carried in the notification message.

For example, the revocation information may be used to revoke a part or all of the authorization for the user data processing.

The authorization update information may indicate permissions for one or more aspects of user data.

The authorization information may be used to indicate authorization for one or more aspects of the user data of the UE.

In some embodiments, the notification message further includes at least one of the following:
an identifier of the user data processing;
an authorization change time for the user data processing; or
an authorization change location for the user data processing.

The identifier (ID) of the user data processing may include, but is not limited to, a UE ID, a processor ID, a subscriber ID, an AF ID, or a PLMN ID and the like.

The authorization network includes but is not limited to a network where the second network device that may collect and/or analyze the user data of the UE is located. For example, the network where the second network device is located may include an HPLMN and/or a VPLMN.

For another example, the network where the second network device is located may also include: a 3G network, a 4G network, and/or a 5G network.

The authorization change time records a time when the authorization, revocation, and/or update of the user data processing occurs.

The authorization change location records a location where the authorization, revocation, and/or update of the user data processing occurs.

In some other embodiments, the update to the authorization parameter at least includes one of following:
an authorization network for the user data processing;
a type of user data; or
an operation type for the user data processing.

In some embodiments, the authorization network includes: an HPLMN; and/or, a VPLMN_{∘}

For example, the authorization network for the user data processing may be: a separate HPLMN, a separate VPLMN, or an HPLMN and a VPLMN.

The types of user data may be classified according to a source of the user data, and may include subscription data of the UE and/or behavior data of the UE.

The types of user data may be classified according to an application, and may include UE call data and/or internet traffic and/or social data and/or consumption data, and the like.

The operation type may include: an operation type used when the user data is processed.

In some embodiments, it is allowed to process raw data or the analysis result of the user data, it is not allowed to process raw data or the analysis result of the user data.

In some embodiments, it is allowed to collect raw data of the user data, collect and analyze the raw data, collect and analyze the raw data, and distribute the analysis result to some other device. However, in another embodiment, the second network device may not allow the analysis result to be redistributed to another device.

In some embodiments, both the second network device and the first network device are located in the HPLMN of the UE; or, the first network device is located in the HPLMN of the UE and the second network device is located in the VPLMN of the UE.

In some embodiments, the NWDAF or Network Exposure Function (NEF) is sent to the second network device.

In some embodiments, both the second network device and the first network device are located in the Home Public Land Mobile Network HPLMN of the UE.

The second network device and the first network device are both located in the HPLMN of the UE, such that the second network device of the HPLMN of the UE may collect, analyze, and/or use the user data generated by the UE at the HPLMN and/or VPLMN.

In some other embodiments, the first network device is located in the HPLMN of the UE and the second network device is located in the Visited Public Land Mobile Network VPLMN of the UE.

The first network device is located in the HPLMN of the UE, and the second network device is located in the VPLMN of the UE. Thus, when the UE roams in the PLMN where the second network device is located, the second network device may collect, analyze, and/or use the user data generated by the UE at the VPLMN and/or HPLMN.

In some embodiments, the notification message is sent to the second network device via a Network Data Analysis Function NWDAF or a Network Exposure Function NEF.

For example, the second network device is located in the HPLMN and is not connected to the HPLMN via the NEF of the HPLMN, the first network device may send the notification message to the second network device via the NWDAF.

For another example, the second network device is located in the HPLMN and is connected to the HPLMN via the NEF of the HPLMN, the notification message may be sent to the second network device via the NEF.

In some other embodiments, the second network device is located in the VPLMN, the first network device of the HPLMN sends to the second network device located in the VPLMN via the NEF and a Security Edge Protection Proxy (SEPP).

In some other embodiments, the second network device is located in the VPLMN, the first network device of the HPLMN sends to the second network device located in the VPLMN via the Security Edge Protection Proxy SEPP.

In some other embodiments, the second network device is located in the VPLMN, the first network device of the HPLMN sends to the second network device of the VPLMN via the NWDAF and SEPP. The sending herein may include: transparently transmitting or forwarding by the NWDAF and SEPP to the second network device in the VPLMN.

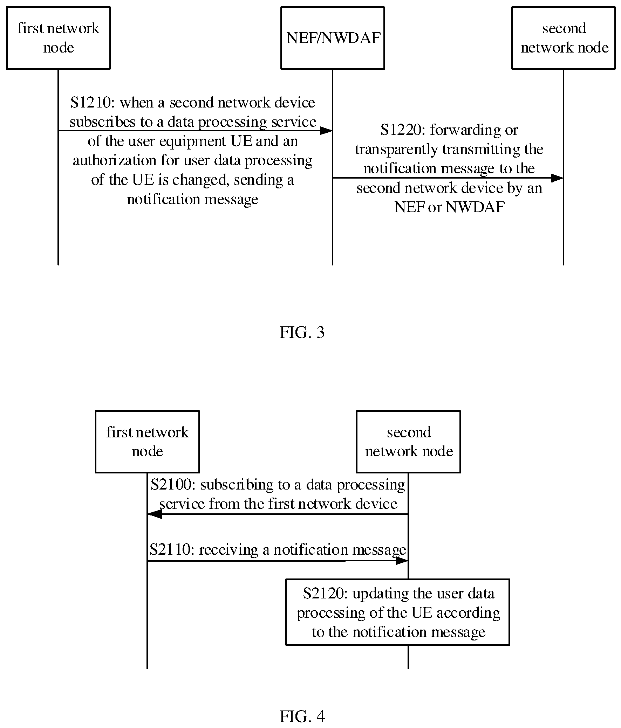

As shown in FIG. 3, the embodiments of the present disclosure provide a method for processing information, and the method may include:
in S1210: when the second network device requests a data processing service from a user equipment UE and an authorization for user data processing of the UE is changed, a notification message is sent to an NEF or an NWDAF; where the notification message is used to notify the second network device to update the user data processing of the UE;
in S1220: the notification message is forwarded or transparently transmitted by the NEF or NWDAF to the second network device.

The embodiments of the present disclosure provide a method for processing information, and the method may include:
in S1210: when the second network device requests a data processing service from a user equipment UE and an authorization for user data processing of the UE is changed, a notification message is sent to an SEPP; the notification message is used to notify the second network device to update the user data processing of the UE;
S1220: the notification message is forwarded or transparently transmitted by the SEPP to the second network device located in Visited Public Land Mobile Network (VPLMN) of the UE. As shown in FIG. 4, the embodiments of the present disclosure provide a method for processing information, performed by a second network device, the method includes:
S2100: a data processing service is requested to a first network device;
S2110: a notification message is received;
S2120: user data processing of a UE is updated according to the notification message.

The second network device may be any network device that performs the user data processing on the UE. For example, the second network device may be a network device such as AF and/or NWDAF and the like.

For example, the second network device may send a request to the first network device to implement the request for the user data processing service.

The second network device receives the notification message provided by the first network device, the notification message may be used by the second network device to change the processing behavior of the user data of the UE, so as to easily and flexibly adjust the user data processing of the UE.

The second network device may be located in the HPLMN along with the first network device that sent the notification message, or the first network device may be located in the HPLMN and the second network device may be located in the VPLMN.

In some embodiments, the user data processing includes at least one of the following:
collection of user data;
analysis of user data;
consumption of an analysis result of user data; or
consumption of a collection result of user data.

In some embodiments, the user data processing includes at least one of the following:
collection of user data;
analysis of user data;
use of an analysis result of user data; or
use of a collection result of user data.

In some embodiments, the user data processing may include that: since the UE inevitably generates the corresponding subscription data and/or behavior data when using the network, the collection of the user data may be performed at this time.

In some other embodiments, the user data processing may further include: after the user data of the UE is collected, specific analyses may be performed on the corresponding user data, such as an analysis of a movement trajectory of the UE, an analysis of consumption habits of the UE, and an analysis of service preferences of the UE. There are merely examples of the user data analysis, and the specific implementation is not limited to the above examples.

In some embodiments, after completing the collection and analysis of the user data, the corresponding collection result and analysis result is generated. Some network devices may use the collected or analyzed user data to perform specific operations. For example, based on the analysis result of the user data, a service recommendation may be provided to the UE, or an appropriate network access may be selected for the UE. Such service recommendations and recommendations or selections of appropriate network access belong to the use of the analysis result.

For another example, after the collection result of the user data of the UE is obtained, the data may be analyzed according to the collection result or the data may be stored and backed up for retention or other subsequent processing, and the subsequent processes all constitute the use of the collection result.

In some embodiments, the second network device includes at least one of the following:
a network device that collects user data;
a network device that analyzes user data;
a network device that uses a collection result of user data;
a network device that uses an analysis result of user data.

The second network device may be any of the aforementioned devices. For example, the second network device may be a Network Data Analysis Function (NWDAF). For another example, the second network device may be an Application Function (AF).

The second network device may be located in the HPLMN of the UE or at the VPLMN of the UE.

In some embodiments, the notification message includes an identifier of the UE; the notification message further includes at least one of the following:
revocation information, indicating revocation of the authorization for the user data processing;
authorization update information, indicating an update to an authorization parameter for the user data processing; or
authorization information, indicating the authorization for the user data processing.

In the present disclosure, the notification message may be any notification related to user data authorization. Specifically, it indicates what kind of change in the user data authorization for the UE, which may be determined according to information carried in the notification message.

For example, the revocation information may be used to revoke a part or all of the authorization for the user data processing.

The authorization update information may indicate permissions for one or more aspects of user data.

The authorization information may be used to indicate authorization for one or more aspects of the user data of the UE.

In some embodiments, the notification message further includes:
an identifier of the user data processing;
an authorization change time for the user data processing; or
an authorization change region for the user data processing.

In some embodiments, the update to the authorization parameter at least includes one of following:
an authorization network for the user data processing;
a type of user data; or
an operation type for the user data processing.

The identifier (ID) of the user data processing may include, but is not limited to, a UE ID, a processor ID, a subscriber ID, an AF ID, or a PLMN ID and the like.

The authorization network includes but is not limited to a network where the second network device that may collect and/or analyze the user data of the UE is located. For example, the network where the second network device is located may include an HPLMN and/or a VPLMN.

For another example, the network where the second network device is located may also include: a 3G network, a 4G network, and/or a 5G network.

In some embodiments, the authorization network includes: an HPLMN; and/or, a VPLMN_{∘}

For example, the authorization network for the user data processing may be: a separate HPLMN, a separate VPLMN, or an HPLMN and a VPLMN.

In some embodiments, both the second network device and the first network device are located in the HPLMN of the UE; or, the first network device is located in the HPLMN of the UE and the second network device is located in the VPLMN of the UE.

In some embodiments, the notification message is sent to the second network device via the NWDAF or the Network Exposure Function (NEF).

In some embodiments, the notification message is sent to the second network device via the SEPP.

In the embodiments of the present disclosure, the revocation and/or change of user consent for user data processing by the network device, i.e., the Network Function (NF), is enhanced. This function enhancement may reuse the notification process of the contract data change, that is, the Nudm_SDM_notification process.

The UDM updates the subscription information, and the updated subscription information updates the user consent according to the UE's request, and that is, requesting to update the user data processing. For example, the updated subscription information indicates the modification of the authorization of the HPLMN and/or VPLMN for the collection, analysis, use of collection result, and/or use of analysis result of the user data.

The UDM sends out a Nudm_SDM_Notify message which include a UE ID, a processor ID, a purpose of processing, a user consent result to a Home NWDAF (i.e. H-NWDF)/ a Visited NWDAF (i.e. V-NWDAF), a Home NEF (i.e. HNEF), or an SEPP. The Nudm_SDM_Notify message may be one of the aforementioned update notifications. In specific implementation, the update notification indicating the authorization update for the user data processing mentioned above is not limited to the Nudm_SDM_Notify message.

The UE ID may include, but is not limited to, at least one of the following:
a User Permanent Identifier (SUPI)
a User Concealed Identifier (SUCI)
a Generic Public Subscription Identifier (GPSI)
a processor ID, which refers to a data processor that processes data for the UE;
a VPLMN ID, indicating a VPLMN that processes the user data;
an HPLMN ID, indicating an HPLMN that processes the user data;
an AF ID, indicating an application function that processes the user data of UE.

If the SEPP is responsible for transparent transmission of the notification messages, the UDM sends the notification messages via the SEPP to increase, revoke, or update the user data processing of the UE.

If the H-NEF is responsible for forwarding or transparently transmitting the notification message, the H-NEF sends the notification message to the NF in VPLMN via the SEPP to increase, revoke, or update the user data processing of the UE.

If the H-NEF is responsible for forwarding or transparently transmitting the notification message, the H-NEF sends the notification message to the NF in HPLMN to increase, revoke, or update the user data processing of the UE.

If the H-NWDAF/V-NWDAF is responsible for transparent transmission of the notification message, the H-NWDAF/V-NWDAF deletes the user data of the UE and stop processing the user data of the UE according to the update notification.

If the H-NWDAF is responsible for forwarding the notification message, the H-NWDAF sends the notification message to the NF in the HPLMN to increase, revoke, or update the user data processing of the UE. If the V-NWDAF is responsible for forwarding the notification message, the V-NWDAF sends the notification message to the NF in the HPLMN to increase, revoke, or update the user data processing of the UE.

If the H-NWDAF is responsible for forwarding the notification message, the H-NWDAF sends a user consent revocation notification message to the NF in the VPLMN via the SEPP.

Once the user consent revocation notification message is received, the NF in the VPLMN or the NF in the HPLMN deletes the user data of the UE and stop processing the data of the roaming user.

The following provides an example of the revocation of the authorization for user data processing of the UE as an illustrative example.

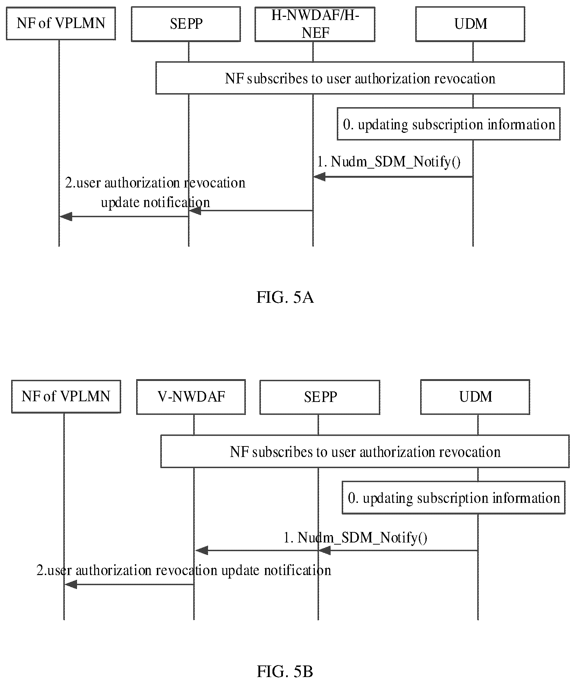

As shown in FIG. 5A, the embodiments of the present disclosure provide a method for processing information, and the method may include:
an H-NWDAF may be an NWDAF in an HPLMN; an H-NEF may be an NEF in an HPLMN

Either the H-NWDAF or the H-NEF requests update information for UDM user data processing authorization, such as sending a notification message including the update information through a request notification, and the notification message includes but is not limited to Nudm_SDM_notification.
0. the UDM updates subscription information, and the updated subscription information is used to request update to the user data processing authorized by the user.
1. the UDM sends a Nudm_SDM_Notify message including a UE ID, a processor ID, a purpose of processing, and a user consent result to the H-NWDAF/H-NEF, to V-NWDAF.

If the H-NEF is responsible for forwarding data, the H-NEF sends the notification message to the NF in the VPLMN via an SEPP. If the H-NWDAF is responsible for forwarding data, the H-NWDAF first determines whether to delete the user data of the UE according to a user consent result, and then sends the notification message to the NF in the VPLMN.

Once a user consent revocation notification message is received, the NF in the VPLMN deletes the user data of the UE according to the user consent result and stop processing the user data.

As shown in FIG. 5B, the embodiments of the present disclosure provide a method for processing information, and the method may include:
a V-NWDAF requests update information for UDM user data processing authorization, for example, sending a notification message including the update information through a request notification, and the notification message includes but is not limited to Nudm_SDM_notification.
0. the UDM updates subscription information, and the updated subscription information is used to request update to the user data processing authorized by the user.
1. the UDM sends a Nudm_SDM_Notify message, including a UE ID, a processor ID, a purpose of processing, and a user consent result to a V-NWDAF via an SEPP.
2. If the user data is processed in the V-NWDAF, the V-NWDAF deletes the user data of the UE and stop processing the user data. If user data is processed by other network elements in the VPLMN, the V-NWDAF also needs to send a user consent update notification message to the NF in the VPLMN.

Once the user consent revocation notification message is received, the NF in the VPLMN deletes the user data of the UE and stop processing the user data subject to user consent.

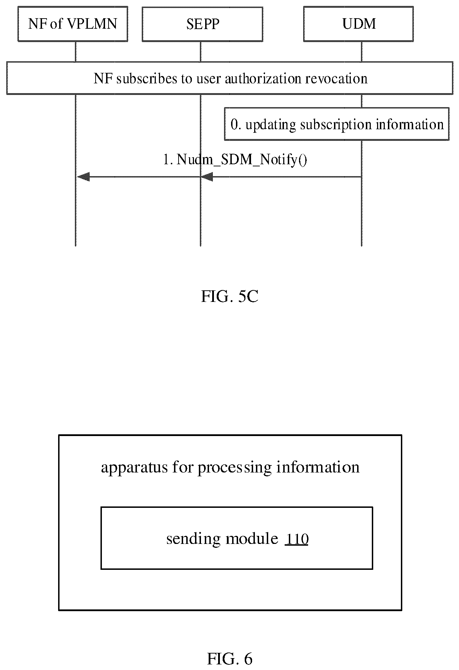

As shown in FIG. 5C, the embodiments of the present disclosure provide a method for processing information, and the method may include:
a NF in a VPLMN requests an update to a UDM user data processing authorization, for example, by requesting a notification message including update information, and the notification message includes but is not limited to Nudm_SDM_notification.
0. the UDM updates subscription information, and the updated subscription information is used to request update to the user data processing authorized by the user.
1. the UDM sends a Nudm_SDM_Notify message to an NF in the VPLMN via SEPP, and the Nudm_SDM_Notify message includes a UE ID, a processor ID, a purpose of processing, and a user consent result.

Once the user consent revocation notification message is received, the NF in the VPLMN deletes the user data of the UE and stop processing the user data subject to user consent.

The methods for processing information shown in FIGS. 5A, 5B, and 5C may not only be used for revoking user data authorization, but also for authorizing the user data processing and/or updating the authorization for the user data processing.

As shown in FIG. 6, the embodiments of the present disclosure provide an apparatus for processing information, and the apparatus includes:
a sending module 110, configured to send a notification message to a second network device when the second network device requests a data processing service from a user equipment UE and an authorization for user data processing of the UE is changed, where the notification message is used to notify the second network device to update the user data processing of the UE.

The apparatus for processing information may be included in UDM and/or UDR.

The sending module 110 may be a transmitting and receiving antenna and/or a network interface, and the like.

In some embodiments, the apparatus may also include a storage module; the storage module is connected to the sending module 110 and may be configured to store at least the notification message.

In some embodiments, the user data processing includes at least one of the following:
collection of user data;
analysis of user data;
use of an analysis result of user data; or
use of a collection result of user data.

In some embodiments, the second network device includes at least one of the following:
a network device collecting user data;
a network device analyzing user data;
a network device using a collection result of user data; or
a network device using an analysis result of user data.

In some embodiments, the notification message includes an identifier of the UE; the notification message further includes one of the following:
revocation information, indicating revocation of the authorization for the user data processing;
authorization update information, indicating an update to an authorization parameter for the user data processing; or
authorization information, indicating the authorization for the user data processing.

In some embodiments, the notification message further includes:
an identifier of the user data processing;
an authorization change time for the user data processing; or
an authorization change region for the user data processing.

The update to the authorization parameter includes at least one of the following:
an authorization network for the user data processing;
a type of user data; or
an operation type for the user data processing.

In some embodiments, the authorization network includes:
a Home Public Land Mobile Network HPLMN;
   and/or,
a Visited Public Land Mobile Network VPLMN.

In some embodiments, the second network device and the first network device are both located in a Home Public Land Mobile Network HPLMN of the UE;
or,
the first network device is located in an HPLMN of the UE and the second network device is located in a Visited Public Land Mobile Network VPLMN of the UE

In some embodiments, the notification message is sent to the second network device iva a Network Data Analysis Function NWDAF or a Network Exposure Function NEF.

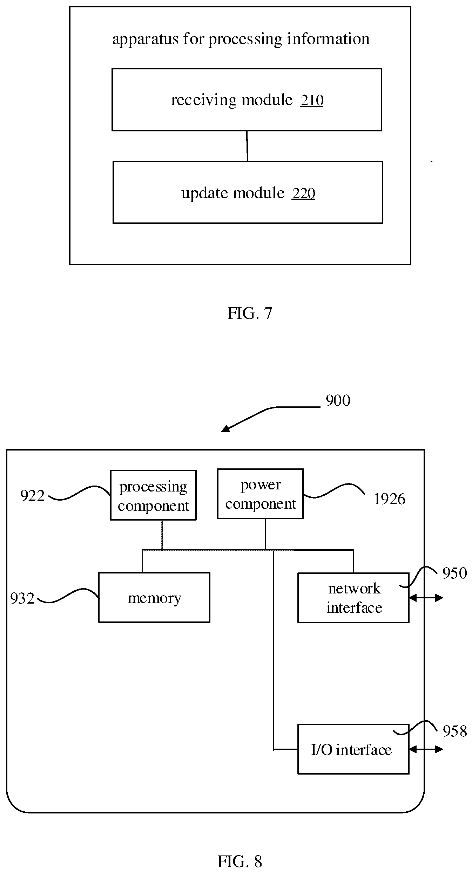

As shown in FIG. 7, the embodiments of the present disclosure provide an apparatus for processing information, and the apparatus includes:
a request module 200, configured to request a data processing service from a first network device;
a receiving module 210, configured to receive a notification message; and
an update module 220, configured to update user data processing of a UE according to the notification message.

The receiving module 210 and the request module 200 may be a transmitting and receiving antenna and/or a network interface.

The update module 220 may be used for various types of processors.

The update module 220 may be connected to the receiving module 210.

In some embodiments, the user data processing includes at least one of the following:
collection of user data;
analysis of user data;
use of an analysis result of user data; or
use of a collection result of user data.

In some embodiments, the second network device includes at least one of the following:
a network device collecting user data;
a network device analyzing user data;
a network device using a collection result of user data; or
a network device using an analysis result of user data.

In some embodiments, the notification message includes an identifier of the UE; the notification message further includes one of the following:
revocation information, indicating revocation of the authorization for the user data processing;
authorization update information, indicating an update to an authorization parameter for the user data processing; or
authorization information, indicating the authorization for the user data processing.

In some embodiments, the notification message further includes:
an identifier of the user data processing;
an authorization change time for the user data processing; or
an authorization change region for the user data processing.

The update to the authorization parameter includes at least one of the following:
an authorization network for the user data processing;
a type of user data; or
an operation type for the user data processing.

In some embodiments, the authorization network includes:
a Home Public Land Mobile Network HPLMN;
   and/or,
a Visited Public Land Mobile Network VPLMN.

The embodiments of the present disclosure provide a communication device including:
a memory configured to store an executable instruction of a processor;
a processor, connected to memory separately;
the processor is configured to execute the method for processing information provided by any of the aforementioned technical solutions.

The processor may include various types of storage medium, which are non-temporary computer storage medium that may continue to retain and store information on the communication device after the communication device loses power.

Here, the communication device includes any of the aforementioned network devices, such as a first network device, a second network device, and/or a third network device.

The processor may be connected to the memory through a bus or the like for reading executable programs stored on the memory, such as at least one of the methods shown in FIGS. 2 to 4 and FIGS. 5A to 5C.

In an exemplary embodiment, a non-temporary computer-readable storage medium including instructions is also provided, such as a memory 804 including instructions, which may be executed by a processor 820 of UE 800 to generate the method described above. For example, the non-temporary computer-readable storage medium may be an ROM, a random access memory (RAM), a CD-ROM, a magnetic tape, a floppy disk, an optical data storage device, and the like.

As shown in FIG. 8, an embodiment of the present disclosure illustrates a structure of a network device. For example, the network device 900 may be any of the aforementioned first network device, NEF, NWDAF, and/or the second network device.

Referring to FIG. 8, the network device 900 includes a processing component 922, which further includes one or more processors and a memory resource represented by memory 932 for storing instructions executable by the processing component 922, such as application programs. The application programs stored in memory 932 may include one or more modules, each corresponding to a set of instructions. Furthermore, the processing component 922 is configured to execute the instructions to implement any of the methods applied to the access device, for example, any of the methods shown in FIGS. 2 to 4 and FIGS. 5A to 5C.

The network device 900 may further include a power component 926, configured to perform power management for the network device 900, a wired or wireless network interface 950, configured to connect the network device 900 to a network, and an input/output (I/O) interface 958. The network device 900 may operate based on an operating system stored in memory 932, such as Windows Server^{™}, Mac OS X^{™}, Unix^{™}, Linux^{™}, FreeBSD^{™}, or similar operating systems.

The present disclosure provides a computer storage medium, where the computer storage medium stores an executable program. When executed by a processor, the executable program enables the implementation of any of the methods for processing information provided in the foregoing technical solutions, for example, any of the methods for processing information described in FIGS. 2 to 5.

The computer storage medium may include any non-transitory storage medium or a permanent storage medium.

**A** person skilled in the art, upon considering the specification and practicing the invention disclosed herein, will readily conceive other embodiments of the present disclosure. The present disclosure is intended to cover any modifications, applications, or adaptations of the invention that adhere to its general principles and include commonly known knowledge or conventional technical means in the relevant field that are not explicitly disclosed herein. The specification and embodiments are to be regarded merely as exemplary, and the true scope and spirit of the disclosure are defined by the following claims.

It should be understood that the present disclosure is not limited to the precise structures described above and illustrated in the accompanying drawings, and various modifications and changes may be made without departing from its scope. The scope of the present disclosure is solely defined by the appended claims.

## Claims

1. A method for processing information, performed by a first network device, comprising:
sending, when a second network device requests a data processing service from a user equipment UE and an authorization for user data processing of the UE is changed, a notification message to the second network device, wherein the notification message is used to notify the second network device to update the user data processing of the UE.

2. The method according to claim 1, wherein the user data processing comprises at least one of following:
collection of user data;
analysis of user data;
use of an analysis result of user data; or
use of a collection result of user data.

3. The method according to claim 1 or 2, wherein the second network device comprises at least one of following:
a network device collecting user data;
a network device analyzing user data;
a network device using a collection result of user data; or
a network device using an analysis result of user data.

4. The method according to claim 1 or 2, wherein the notification message comprises an identifier of the UE; and the notification message further comprises one of following:
revocation information, indicating revocation of the authorization for the user data processing;
authorization update information, indicating an update to an authorization parameter for the user data processing; or
authorization information, indicating the authorization for the user data processing.

5. The method according to claim 4, wherein the notification message further comprises at least one of following:
an identifier of the user data processing;
an authorization change time for the user data processing; or
an authorization change region for the user data processing.

6. The method according to claim 5, wherein the update to the authorization parameter comprises at least one of following:
an authorization network for the user data processing;
a type of user data; or
an operation type for the user data processing.

7. The method according to claim 6, wherein the authorization network comprises:
a Home Public Land Mobile Network HPLMN; and/or,
a Visited Public Land Mobile Network VPLMN.

8. The method according to any one of claims 1 to 7, wherein,
the second network device and the first network device are both located in a Home Public Land Mobile Network HPLMN of the UE; or
the first network device is located in an HPLMN of the UE and the second network device is located in a Visited Public Land Mobile Network VPLMN of the UE.

9. The method according to any one of claims 1 to 8, wherein,
the notification message is sent to the second network device via a Network Data Analysis Function NWDAF or a Network Exposure Function NEF; or
the notification message is sent to the second network device located in a Visited Public Land Mobile Network VPLMN of the UE via a Security Edge Protection Proxy SEPP.

10. A method for processing information, performed by a second network device, comprising:
requesting a data processing service from a first network device;
receiving a notification message; and
updating user data processing of a UE according to the notification message.

11. The method according to claim 10, wherein the user data processing comprises at least one of following:
collection of user data;
analysis of user data;
use of an analysis result of user data; or
use of a collection result of user data.

12. The method according to claim 10 or 11, wherein the second network device comprises at least one of following:
a network device collecting user data;
a network device analyzing user data;
a network device using a collection result of user data; or
a network device using an analysis result of user data.

13. The method according to claim 10 or 11, wherein the notification message comprises an identifier of the UE; and the notification message further comprises one of following:
revocation information, indicating revocation of the authorization for the user data processing;
authorization update information, indicating an update to an authorization parameter for the user data processing; or
authorization information, indicating the authorization for the user data processing.

14. An apparatus for processing information, comprising:
a sending module, configured to send a notification message to a second network device when the second network device requests a data processing service from a user equipment UE and an authorization for user data processing of the UE is changed, wherein the notification message is used to notify the second network device to update the user data processing of the UE.

15. An apparatus for processing information comprising:
a request module, configured to request a data processing service from a first network device;
a receiving module, configured to receive a notification message; and
an update module, configured to update user data processing of a UE according to the notification message.

16. A communication device comprising a processor, a transceiver, a memory, and an executable program stored on the memory and capable of being executed by the processor, wherein when the processor executes the executable program, the method provided in any of claims 1 to 9 or 10 to 13 is performed.

17. A computer storage medium storing an executable program; wherein the executable program is executed by a processor to implement the method provided in any of claims 1 to 9 or 10 to 13.
